(19) **Europäisches Patentamt**
**European Patent Office**
**Office européen des brevets**

(11) **EP 2 687 485 A1**

(12) **EUROPEAN PATENT APPLICATION**
published in accordance with Art. 153(4) EPC

(43) Date of publication:
**22.01.2014 Bulletin 2014/04**

(21) Application number: **12805555.5**

(22) Date of filing: **15.03.2012**

(51) Int Cl.:
*C01B 31/02* (2006.01)     *C01B 31/04* (2006.01)
*B01J 19/18* (2006.01)

(86) International application number:
**PCT/KR2012/001888**

(87) International publication number:
**WO 2013/133467 (12.09.2013 Gazette 2013/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **09.03.2012  KR 20120024193**
                **09.03.2012  KR 20120024194**

(71) Applicants:
  • **Research & Business Foundation Sungkyunkwan University**
    **Suwon-si, Gyeonggi-do 440-746 (KR)**
  • **Dayou Smart Aluminium Co., Ltd.**
    **Gwangju 502-834 (KR)**

(72) Inventors:
  • **LEE, Young Hee**
    **Suwon-si**
    **Gyeonggi-do 441-841 (KR)**

  • **SO, Kang Pyo**
    **Jeollabuk-do 590-881 (KR)**
  • **KEUM, Dong Hoon**
    **Gyeongsanbuk-do 750-769 (KR)**
  • **PARK, Young Woo**
    **Gyeonggi-do 462-120 (KR)**
  • **PARK, Jong Gil**
    **Gyeonggi-do 462-120 (KR)**
  • **JEONG, Jun Cheol**
    **Gyeonggi-do 462-120 (KR)**
  • **CHOI, Yong Ho**
    **Gyeonggi-do 462-120 (KR)**

(74) Representative: **Chaillot, Geneviève et al**
    **Cabinet Chaillot**
    **16-20, Avenue de l'Agent Sarre**
    **B.O. nº 74**
    **92703 Colombes Cedex (FR)**

(54) **METHOD FOR PRODUCING PLANAR CARBON NANOPARTICLES, AND METHOD FOR PRODUCING ALUMINUM/CARBON COMPOSITE MATERIAL USING SAME**

(57)     Provided is a method of producing carbon nanoparticles, involving: applying a mechanical shearing force to a graphite material in a ball mill container combined with a disc, the ball mill container configured to be rotatable in a first direction, and the disc configured to be rotatable in a second direction opposite to the first direction; and separating produced carbon nanoparticles from the graphite material. A method of producing an aluminum-carbon composite material, and an aluminum-carbon composite material obtained by such a method are also provided.

[Fig. 1]

START

PLACE GRAPHITE MATERIAL AND BALL MILL BALLS IN BALL MILL CONTAINER — S110

APPLY MECHANICAL SHEARING FORCE TO GRAPHITE MATERIAL BY ROTATING DISC AND BALL MILL CONTAINER — S120

SEPARATE CARBON NANOPLATES — S130

END

EP 2 687 485 A1

**Description**

**CROSS-REFERENCE TO RELATED APPLICATION**

This application claims the benefit of priority to Korean Patent Application No. 2012-0024193 filed on March 9, 2012 and Korean Patent Application No. 2012-0024194 filed on March 9, 2012, in the Korean Intellectual Property Office, the entire disclosure of which are incorporated herein by reference for all purposes.

**BACKGROUND**

**1. Field**

The following description relates to a method of producing carbon nanoparticles and a method of producing an aluminum-carbon composite material, and for example, to a method of producing plate-type carbon nanoparticles formed of a single layer to few tens of carbon atomic layers and a method of producing an aluminum-carbon composite material by using plate-type carbon nanoparticles.

**2. Description of Related Art**

Carbon materials, materials composed of carbon atoms as a main component, are widely presented in nature and have been used as carbonaceous materials, such as charcoal or ink sticks. In particular, since carbon materials are characterized by physical properties such as ability to stand ultra high temperature, ultra light weight, and ultra wear resistance, the applications thereof in advanced industries are rapidly increasing. Thus, carbon materials are classified as one of four major materials along with metal, ceramic, and polymer.

Carbon materials may have a compound structure in which other elements are combined with carbon atoms. Since electrical and mechanical properties of carbon materials may differ according to its form and its combination with other elements, the characteristics of carbon materials may be varied according to specific applications in various fields. Therefore, various carbon products are industrially produced. Materials composed only of carbon atoms include: carbon fibers, graphite, and nano-carbon materials, such as carbon nanotubes, graphene, carbon nanoplates, fullerene, and the like.

Nano-carbon materials have good thermal, electrical, and mechanical properties. Thus, the applications thereof are expected in many fields as those of general carbon materials. In particular, a two-dimensional structure of graphene or plate-type carbon nanoparticles has very unique characteristics that differ from other carbon allotropes in view of electrical-electronic applications as well as unusual physical properties. For example, due to its two-dimensional structure, an electronic circuit may be formed by introducing a general semiconductor process, a top-down method represented as lithography and etching.

Further, nano-carbon materials have very high specific surface area and thus, may have unique physical and chemical properties which may not be observed in a bulk state. High-efficiency/multifunctional products using such characteristics of nano materials are being researched, and the application fields thereof are also gradually increased.

Aluminum is universally used in making, for example, foils, disposable dishes, windows, automobiles, airplanes, and spaceships. Aluminum is characterized by a weight that is about 1/3 of that of iron. In addition, aluminum exhibits excellent strength in the case of being made into an alloy with other metals. Also, since a chemically stable oxide layer exists on a surface of aluminum, the progress of corrosion due to moisture or oxygen may be prevented, rendering aluminum chemically stable. Accordingly, aluminum has been used in automobiles and airplanes. In particular, in the cases of automobiles, since aluminum parts are lighter than typical steel parts, the weight of the automobiles may be reduced; these weight reductions in automotive bodies may further contribute to improved fuel economy. Therefore, aluminum parts may serve two ends. However, since tensile strength of aluminum is about 40% of that of steel, a structural aluminum pipe or plate becomes very thick when aluminum is used as a structural material. As a result, this may generate limitations in which a material may be excessively required and excessive material costs may be required.

In order to address such limitations, research into the preparation of a composite material between a carbon material having excellent tensile strength and aluminum has been actively conducted. There are several limitations to be addressed in order to prepare a composite between a carbon material and aluminum. For example, since dispersion of a carbon material, such as a carbon nanomaterial, is not facilitated due to an interaction caused by van der Waals force between materials, uniform dispersion in aluminum may be difficult. Also, carbon material and aluminum may not mix well due to the difference in surface tension between the carbon material and the aluminum.

## SUMMARY

In one general aspect, there is provided a method of producing carbon nanoparticles, the method involving: applying a mechanical shearing force to a graphite material in a ball mill container combined with a disc, the ball mill container configured to be rotatable in a first direction, and the disc configured to be rotatable in a second direction opposite to the first direction; and separating produced carbon nanoparticles from the graphite material.

In the general aspect of the method, 80% wt or more of the produced carbon nanoparticles separated from the graphite material may be plate-type carbon materials formed of a single layer to 30 layers of carbon atomic layers.

In the general aspect of the method, the mechanical shearing force may be applied to the graphite material by placing the graphite material and ball mill balls in the ball mill container combined with the disc and rotating the disc and the ball mill container for a predetermined time to allow the ball mill balls to generate friction with a wall of the ball mill container and rotate by themselves.

The graphite material may include at least one or more selected from the group consisting of a plate-type artificial graphite material, a powder-type artificial graphite material, a lump artificial graphite material, a plate-type natural graphite material, a powder-type natural graphite material, and a lump natural graphite material.

The rotating of the disc and the ball mill container to apply a mechanical shearing force to the graphite material may be performed in a non-oxidizing atmosphere.

A ratio of rotation velocity of the ball mill container to rotation velocity of the disc may be in a range of 30% or more to 70% or less of a critical angular velocity ratio.

The rotation velocity of the disc may be in a range of 150 rpm or more to 500 rpm or less.

In the general aspect of the method, an exfoliating agent increasing a frictional force between the graphite material and the ball mill balls may be further added in the placing of the graphite material and the ball mill balls in the ball mill container.

The exfoliating agent may include at least one selected from the group consisting of a surfactant, an organic material, and an inorganic material, which increase the frictional force between the graphite material and the ball mill ball, the surfactant comprises at least one selected from the group consisting of sodium dodecyl sulfate (SDS), sodium dodecylbenzene sulfonate (NaDDBs), and cetyltrimethylammonium bromide (CTAB), the organic material comprises at least one selected from the group consisting of sugar and deoxyribonucleic acid (DNA), and the inorganic material comprises aluminum.

The general aspect of the method may further involve washing the separated carbon nanoparticles by using a solvent dissolving the exfoliating agent.

The disc and the ball mill container may be rotated for 4 hours or more.

In another general aspect, there is provided a method of producing an aluminum-carbon composite material, the method involving: producing aluminum-carbon mixed powder by combining aluminum powder with a carbon material; preparing deformed aluminum-carbon mixed powder by applying a mechanical shearing force to the aluminum-carbon mixed powder; and press-sintering the deformed aluminum-carbon mixed powder.

The producing of the aluminum-carbon mixed powder may involve: ultrasonicating after mixing a carbon material with a solvent; and ultrasonicating after adding aluminum powder to the ultrasonicated mixed solution.

The carbon material may include at least one selected from the group consisting of graphite plates, graphite fibers, carbon fibers, carbon nanofibers, and carbon nanotubes.

The aluminum powder may be added to allow the carbon material to be included in an amount ranging from about 0.1 wt% to about 50 wt% based on a weight of the aluminum powder.

The preparing of the deformed aluminum-carbon mixed powder may involve: placing the aluminum-carbon mixed powder and ball mill balls in a ball mill container combined with a disc rotatable in a first direction to be rotatable in a second direction opposite to the first direction; and rotating the disc and the ball mill container for a predetermined time to allow the ball mill balls to generate friction with a wall of the ball mill container and rotate by themselves to apply a mechanical shearing force to the aluminum-carbon mixed powder.

A ratio of rotation velocity of the ball mill container to rotation velocity of the disc may be in a range of 30% or more to 70% or less of a critical angular velocity ratio.

The rotation velocity of the disc may be in a range of 150 rpm or more to 500 rpm or less.

The press-sintering of the deformed aluminum-carbon mixed powder may involve: charging the deformed aluminum-carbon mixed powder into a mold; and heating the deformed aluminum-carbon mixed powder to a temperature ranging from 500°C to 700°C in a state in which a pressure ranging from 10 MPa to 100 MPa is applied to the deformed aluminum-carbon mixed powder charged into the mold.

In another general aspect, there is provided an aluminum-carbon mixed composite material obtained by press-sintering deformed aluminum-carbon mixed powder according to the method described above.

Other features and aspects may be apparent from the following detailed description, the drawings, and the claims.

## BRIEF DESCRIPTION OF THE DRAWINGS

FIG. 1 is a flowchart illustrating an example of a method of producing plate-type carbon nanoparticles.

FIG. 2 is a plan view illustrating an example of a ball mill apparatus.

FIG. 3 is a schematic diagram illustrating forces applied to a ball mill ball introduced in an example ball mill container.

FIG. 4 is a flowchart illustrating an example of a method of producing plate-type carbon nanoparticles.

FIG. 5 is an electron micrograph of a graphite material not subjected to a ball milling process and electron micrographs of graphite materials subjected to ball milling processes respectively for 0.5 hours, 1 hour, 2 hours, 4 hours, and 6 hours according to the method illustrated in FIG. 1.

Fig. 6 is a graph showing X-ray diffraction measurements of plate-type carbon nanoparticles produced according to the method illustrated in FIG. 1.

FIG. 7 is an electron micrograph of a graphite material not subjected to a ball milling process and electron micrographs of graphite materials subjected to ball milling processes respectively for 0.5 hours, 1 hour, 2 hours, 4 hours, and 6 hours according to the method illustrated in FIG. 4.

Fig. 8 is a graph showing X-ray diffraction measurements of plate-type carbon nanoparticles produced according to the method illustrated in FIG. 4.

FIG. 9 is electron micrographs taken after dispersing the produced plate-type carbon nanoparticles by using a spin coating method on polyethylene terephthalate (PET) in order to observe shapes of the plate-type carbon nanoparticles produced according to the method illustrated in FIG. 4.

FIG. 10 is an electron micrograph (a) of carbon nanoparticles produced according to Comparative Example 1, an electron micrograph (b) of carbon nanoparticles produced according to Example 2, an electron micrograph (c) of carbon nanoparticles produced according to Comparative Example 2, and an electron micrograph (a) of carbon nanoparticles produced according to Comparative Example 3.

FIG. 11 is a flowchart illustrating an example of a method of producing an aluminum-carbon composite material.

FIG. 12 is a plan view illustrating an example of a ball mill apparatus.

FIG. 13 is a schematic diagram illustrating forces applied to a ball mill ball introduced in an example ball mill container.

FIG. 14 is a schematic diagram illustrating an example of a sinter press.

FIG. 15 is electron micrographs of examples of ultrasonicated aluminum samples.

FIG. 16 is electron micrographs (X1,000) of examples of deformed aluminum-carbon mixed particles after a ball milling process.

FIG. 17 is photographs for illustrating microstructures of an example of an aluminum material without the addition of a carbon material and an aluminum-carbon composite material including 0.05 wt% of the carbon material.

FIG. 18 is (a) the result of confocal Raman (WITec GmbH, CRM 200) measurements of an aluminum-carbon composite material produced by performing a ball milling process under a condition in which ball mill balls mainly impact aluminum-carbon mixed powder and (b) the result of confocal Raman (WITec GmbH, CRM 200) measurements of an aluminum-carbon composite material produced by performing a ball milling process under a condition in which ball mill balls mainly apply a mechanical shearing force to aluminum-carbon mixed powder according to Example 1.

FIG. 19 is a graph showing the result of tensile strength measurements for a sample (RAW) of an aluminum material, a sample (Al-0.1 wt% C, Example 2) of an aluminum-carbon composite material having a content of a carbon material of 0.1 wt%, and a sample (Al-0.3 wt% C, Example 3) of an aluminum-carbon composite material having a content of a carbon material of 0.3 wt%.

FIG. 20 is a graph showing the result of tensile strength measurements for aluminum-carbon composite materials produced according to Comparative Example 1, Example 2, Comparative Example 2, and Example 3.

Throughout the drawings and the detailed description, unless otherwise described, the same drawing reference numerals will be understood to refer to the same elements, features, and structures. The relative size and depiction of these elements may be exaggerated for clarity, illustration, and convenience.

## DETAILED DESCRIPTION

The following detailed description is provided to assist the reader in gaining a comprehensive understanding of the methods, apparatuses, and/or systems described herein. Accordingly, various changes, modifications, and equivalents of the systems, apparatuses and/or methods described herein will be suggested to those of ordinary skill in the art. Also, descriptions of well-known functions and constructions may be omitted for increased clarity and conciseness.

In case it is mentioned that a certain component is "disposed" or "connected" on or to another component or layer, it may be understood that the certain component is directly disposed on or connected to the another component or that a component is interposed between the components. However, in case it is mentioned that a certain component is "directly" disposed or "connected" on or to another component, it should be understood that no component is interposed between the components. Though terms including ordinal numbers such as a "first", a "second", a "third", etc. may be used to explain various components, such as elements, composites, regions, layers and/or parts, the components are not limited to the terms.

Terms used in the present description are to merely explain specific embodiments, thus it is not meant to be limiting. Except that they are not differently defined, all terms used in the present description including technical or scientific terms have the same meanings with terms that are generally understood by those skilled in the art related to the field of the present specification. The terms same as those of which are defined in a general dictionary should be understood that the terms have meanings same as contextual meanings of the related art. And, as long as the terms are not definitely defined in the present description, the terms are not interpreted as ideal or excessively formal meanings.

Various examples will be described with reference to cross-section drawings that are schematic drawings of ideal embodiments. Accordingly, the drawings allow changes in shape, for example, changes in manufacturing method and/or permissible error. In other words, the examples are not limited to the specific shapes illustrated in the drawings but include some deviations in shape. Also, the regions shown in the drawings are merely schematic, and the shapes of the regions are intended neither to show the exact shapes of the regions nor to limit the scope of the claims.

Described below are examples of methods of producing plate-type carbon nanoparticles by using a mechanical shearing force. Further, described below are examples of aluminum-carbon composite material that use plate-type carbon nanoparticles produced according to various examples of methods.

<Method of Producing Plate-type Carbon Nanoparticles>

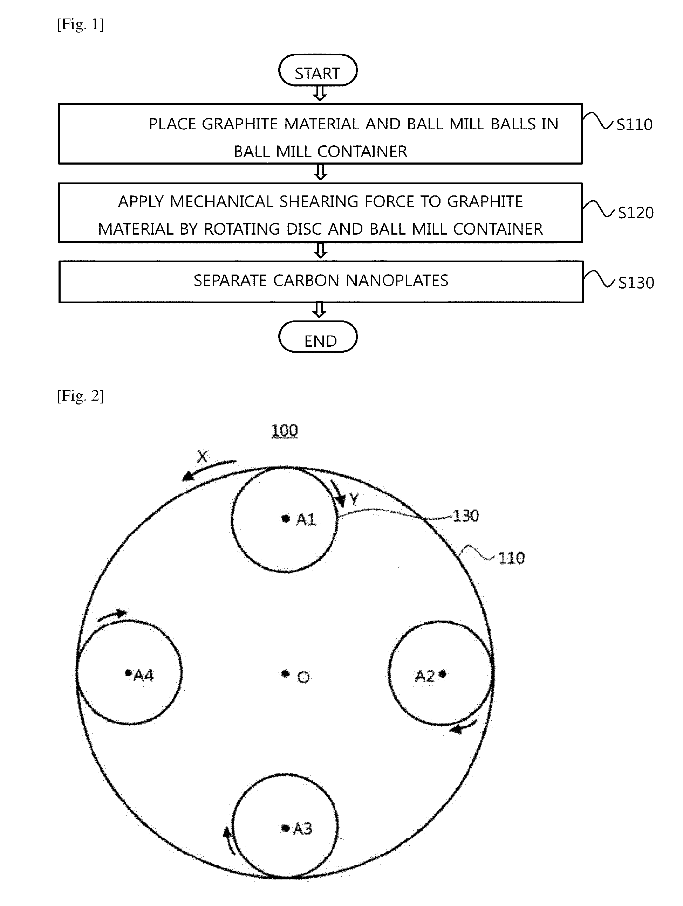

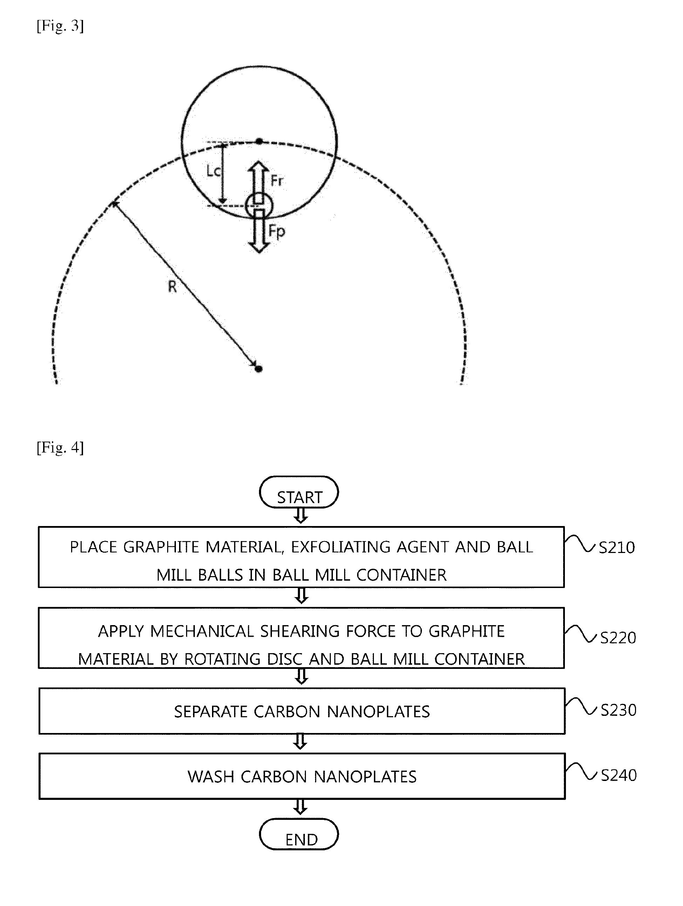

FIG. 1 is a flowchart illustrating an example of a method of producing plate-type carbon nanoparticle. FIG. 2 is a plan view illustrating an example of a ball mill apparatus. FIG. 3 is a schematic diagram illustrating forces applied to a ball mill ball introduced in an example of a ball mill container.

Referring to FIGS. 1 and 2, in order to produce plate-type carbon nanoparticles according to an example, a graphite material and ball mill balls may be first introduced into a ball mill container 130 that is configured to be rotatable in a disc 110 (S110).

The disc 100 may rotate in a first direction X around a first central axis (hereinafter, referred to as "revolution axis") positioned at the center "O" of the disc 100. The ball mill container 130 may be combined with the disc 110 at an edge of the disc 110 and may rotate in a second direction Y opposite to the first direction X around a second central axis (hereinafter, referred to as "rotation axis") positioned at the center "A1" of the ball mill container 130. For example, the ball mill container 130 may revolve around the revolution axis by the rotation of the disc 110 and may rotate by the rotation of the ball mill container 130 itself around the rotation axis.

The graphite material may be an artificially prepared graphite material or natural graphite material. A graphite material used in the example may include a plate-type graphite material, a powder-type graphite material, and a lump graphite material, and is not particularly limited to the shape and size thereof. The graphite material generally has a hexagonal crystal structure and has a structure having a plurality of layers stacked therein.

A material for the ball mill ball is not particularly limited, but a ball mill ball formed of a polyimide material may be used in order to effectively apply a frictional force and prevent from excessively damaging the graphite material. A size of the ball mill ball may be appropriately selected in consideration of a shearing force to be applied to the graphite material. For example, a diameter of the ball mill ball may be in a range of about 3 mm to about 50 mm. In the case that the size of the ball mill ball is less than 3 mm, a mass of the ball mill ball may be relatively low and thus, a mechanical shearing force exerted on the graphite material may be lower than a desired value. In contrast, in the case that the size of the ball mill ball is greater than 50 mm, an excessively high shearing force or impact may be exerted on the graphite material and thus, the graphite material may be damaged.

A mixing ratio of the graphite material and the ball mill balls may be appropriately controlled. For example, in order to apply a mechanical shearing force to the entire graphite material, the graphite material and the ball mill balls may be combined so that the total weight of the ball mill balls is greater than that of the graphite material.

Thereafter, the disc 110 and the ball mill container 130 may be rotated so as to allow the ball mill balls introduced in the ball mill container 130 to apply a mechanical shearing force to the graphite material (S 120).

Referring to FIGS. 2 and 3, when the disc 110 and the ball mill container 130 are in rotation, a first centrifugal force Fr due to the revolution of the ball mill container 130 and a second centrifugal force Fp due to the rotation of the ball mill container 130 are exerted on the ball mill ball introduced in the ball mill container 130. The first centrifugal force Fr is exerted in a direction in which the ball mill ball moves away from the revolution axis, and the second centrifugal force Fp is exerted in a direction in which the ball mill ball moves away from the rotation axis. Magnitudes and directions of the exerted first and second centrifugal forces Fr and Fp change according to the position of the ball mill ball. Also, when the ball mill ball container 130 rotates in a state in which the disc 110 rotates, the ball mill ball rotates in the same direction as that of the ball mill container 130 due to a frictional force between the ball mill ball and a wall of the ball mill container 130. According to the action of these forces, the ball mill ball in the ball mill container 130 may have (i) a motion of colliding with other ball mill balls, the graphite material, or the inner wall of the ball mill container 130, or (ii) a motion of generating friction by the rotation of the corresponding ball mill ball in a state of being in contact with other ball mill balls, the graphite material, or the inner wall of the ball mill container 130, i.e., a motion of applying a mechanical shearing force. In the example, the foregoing forces are controlled to allow the ball mill ball to apply a mechanical shearing force to the graphite material in a state of being in contact with the graphite material. The foregoing forces may be controlled by adjusting rotation velocities of the disc 110 and the ball mill container 130.

According to the rotation velocities of the disc 110 and the ball mill container 130, the ball mill balls have various motions caused by the actions of the foregoing forces. Specifically, in the case that rotation velocity of the ball mill container 130 is gradually increased while the ball mill container 130 rotates in a state in which the disc 110 rotates at a predetermined speed, the ball mill balls may have different motions in a first range in which the rotation velocity of the ball mill container 130 is less than a first velocity, a second range in which the rotation velocity of the ball mill container 130 is equal to or greater than the first velocity and less than a second velocity, and a third range in which the rotation velocity of the ball mill container 130 is equal to or greater than the second velocity.

In the first range in which the rotation velocity of the ball mill container 130 is less than the first velocity, the first centrifugal force Fr due to the revolution of the ball mill container 130 greatly acts on the ball mill ball and as a result, the ball mill ball may have a rotation motion around the revolution axis at a position located farthest from the revolution axis in an inner space of the ball mill container 130. In this case, since the inner wall of the ball mill container 130 may apply a frictional force to the ball mill ball due to the rotation of the ball mill container 130, the ball mill ball may rotate by itself.

In the second range in which the rotation velocity of the ball mill container 130 is equal to or greater than the first velocity and less than the second velocity, the first centrifugal force due to the revolution of the ball mill container 130 and the second centrifugal force due to the rotation of the ball mill container 130 interact. Thus, the ball mill ball moves to the inner space of the ball mill container 130 to have a motion of colliding with the wall of the ball mill container.

In the third range in which the rotation velocity of the ball mill container 130 is equal to or greater than the second velocity, the second centrifugal force due to the rotation of the ball mill container 130 is high. Thus, , the ball mill ball may have a rotational motion around the rotation axis in a state of being in contact with the wall of the ball mill container 130. In this case, since friction between the inner wall of the ball mill container 130 and the ball mill ball is virtually non-existent, the ball mill ball does not rotate.

In the present example, rotation velocities of the disc 110 and the ball mill container 130 are controlled so as to allow the ball mill ball to apply a mechanical shearing force to the graphite material by rotating according to the first region. In order for the ball mill ball in the ball mill container 130 to not to have a rotational motion around the rotation axis, the revolution centrifugal force Fr acting on the ball mill ball located at the nearest from the revolution axis in the inner space of the ball mill container 130 must be at least greater than the rotation centrifugal force Fp, as shown in FIG. 3. The revolution centrifugal force Fr acting on the ball mill ball located at the nearest from the revolution axis in the inner space of the ball mill container 130 may be expressed by the following "Equation 1", and the rotation centrifugal force Fp acting on the ball mill ball located at the nearest from the revolution axis in the inner space of the ball mill container 130 may be expressed by the following Equation 2.

[Equation 1]

$$Fr = m(R - Lc)w_1^2$$

[Equation 2]

$$Fp = mLcw_2^2$$

In Equations 1 and 2, "m" denotes a weight of the ball mill ball, "R" denotes a distance between the revolution axis and the rotation axis, i.e., a radius of revolution, "Lc" denotes a value obtained by extracting a diameter of the ball mill ball from a diameter of the ball mill container, "$w_1$" denotes a revolution angular velocity, and "$w_2$" denotes a rotation angular velocity.

In the case that the revolution centrifugal force Fr acting on the ball mill ball located at the nearest from the revolution axis is the same as rotation centrifugal force Fp acting on the ball mill ball, when a ratio "$w_2/w_1$" of the rotation

angular velocity $w_2$ to the revolution angular velocity $w_1$ is denoted as a critical angular velocity ratio "rc", the critical angular velocity ratio "rc" may be expressed by the following Equation 3 that is derived from "Equation 1" and "Equation 2".

[Equation 3]

$$rc = \sqrt{\frac{R}{Lc} - 1}$$

In the present example, the ratio of the rotation velocity to the revolution velocity may be controlled to be in a range of about 30% to about 70% of the critical angular velocity ratio. In order for the ball mill ball to mainly apply a mechanical shearing force to the graphite material instead of colliding with the graphite material by allowing the revolution centrifugal force rather than the rotation centrifugal force to act primarily on the ball mill ball, the ratio ($w_2/w_1$) of the rotation velocity to the revolution velocity must be about 70% or less of the critical angular velocity ratio (rc). For example, in the case that the ratio ($w_2/w_1$) of the rotation velocity to the revolution velocity is greater than 70% of the critical angular velocity ratio (rc), an effect of the centrifugal force caused by the rotation is increased. Thus, the ball mill ball may have a motion of mainly colliding with the graphite material. Further, in the case that the ratio ($w_2/w_1$) of the rotation velocity to the revolution velocity is less than 30% of the critical angular velocity ratio (rc), a mechanical shearing force exerted on the graphite material may become too low as the rotation velocity of the ball mill ball itself is low. As a result, the graphite material may not be delaminated. For instance, the rotation velocity of the ball mill ball itself affects the mechanical shearing force exerted on the graphite material by the ball mill ball, and the rotation velocity of the ball mill ball itself is determined by the rotation velocity. That is, the rotation velocity of the ball mill ball itself increases as the rotation velocity of the ball mill container increases.

The mechanical shearing force exerted on the graphite material by the ball mill ball is also affected by pressure in which the ball mill ball pressurizes the graphite material, and the pressure, in which the ball mill ball pressurizes the graphite material, is affected by the revolution velocity of the ball mill container 130. For example, the pressure in which the ball mill ball pressurizes the graphite material increases as the revolution velocity of the ball mill container 130 increases. In the present example, the revolution velocity of the ball mill container may be controlled to be in a range of about 150 rpm to about 500 rpm in order for the ball mill ball to apply an appropriate magnitude of mechanical shearing force to the graphite material.

In the case that the ball mill ball mainly applies a mechanical shearing force to the graphite material, the graphite material having a shearing force exerted thereon by the ball mill ball may be delaminated into each separate layer because the graphite material has a structure, in which a plurality of layers are stacked, and an interlayer bonding force is relatively weak.

The inside of the ball mill container 130 may be maintained in a non-oxidizing atmosphere during a ball milling process in order to prevent the graphite material from oxidation during the ball milling process. For example, in order to prevent the graphite material from oxidation, the inside of the ball mill container may be maintained in a non-oxidizing atmosphere by purging argon (Ar) gas after being maintained in a vacuum.

Thereafter, produced plate-type carbon nanoparticles may be separated and recovered (S130). The produced plate-type carbon nanoparticles may have a thickness ranging from about 20 nm to about 1000 nm. When the graphite material and the ball mill balls are only put in the ball mill container to perform a ball milling process so as to produce the plate-type carbon nanoparticles, the ball milling process may be performed for about 6 hours or more.

FIG. 4 is a flowchart illustrating a method of producing plate-type carbon nanoparticles according to another example.

Referring to FIG. 4, the example of the method of producing plate-type carbon nanoparticles is substantially the same as the method of producing plate-type carbon nanoparticles described with reference to FIG. 1, except that an exfoliating agent in addition to graphite material and ball mill balls is further mixed and then the mixture is put in a ball mill container (S210) and that produced plate-type carbon nanoparticles are washed (S240). Therefore, hereinafter, the exfoliating agent and the washing operation are mainly described and descriptions related to the other processes will be omitted. It is understood that the description for these processes can be found above with reference to FIG. 1.

The exfoliating agent may increase a frictional force between the graphite material and the ball mill ball. According to some examples, the exfoliating agent may be a surfactant, an organic material, or an inorganic material, which may increase the frictional force between the graphite material and the ball mill ball. For example, the surfactant suitable for an exfoliating agent may be selected from the group consisting of sodium dodecyl sulfate (SDS), sodium dodecylbenzene sulfonate (NaDDBs), and cetyltrimethylammonium bromide (CTAB). The organic material suitable for an exfoliating agent may be selected from the group consisting of sugar and deoxyribonucleic acid (DNA). The inorganic material suitable for an exfoliating agent may be aluminum.

When the exfoliating agent is introduced to increase the frictional force between the graphite material and the ball mill ball, plate-type carbon nanoparticles may be produced even in the case that a ball milling process is performed within a short period time. Specifically, in the case that the exfoliating agent is introduced to produce plate-type carbon nanoparticles, the plate-type carbon nanoparticles may be produced by performing a ball milling process for about 4 hours or more.

A small amount of the exfoliating agent may remain in the plate-type carbon nanoparticles produced through the ball milling process. Therefore, the plate-type carbon nanoparticles produced through the ball milling process may be washed in order to remove the exfoliating agent (S240). In order to wash the plate-type carbon nanoparticles, the plate-type carbon nanoparticles produced through the ball milling process is put into a solvent capable of dissolving the exfoliating agent, and the solvent and the exfoliating agent may then be removed through filtering. For example, when sugar is used as an exfoliating agent, the plate-type carbon nanoparticles produced through the ball milling process is put into distilled water ($H_2O$) to dissolve sugar and the plate-type carbon nanoparticles may then be washed through filtering.

[Example 1]

Two grams (2 g) of a graphite material and 300 g of ball mill balls were put in a steel ball mill container. The container was maintained at a vacuum ($10^{-2}$ torr) in order to prevent oxidation, and then argon (Ar) gas was purged. A ball milling process was performed to produce plate-type carbon nanoparticles. At this time, the graphite material used was an alfar aesar product, natural, having a size of 200 mesh and the ball mill ball used was formed of a polyimide material having a diameter of about 5 mm. The rotation velocity of the ball mill container was 200 rpm, and the rotation velocity of a disc was 300 rpm.

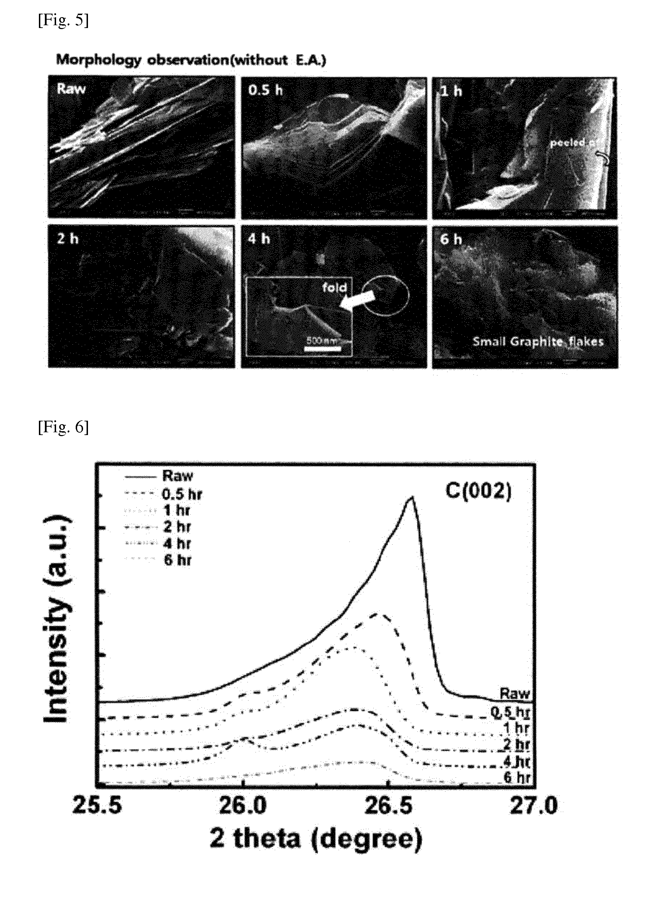

FIG. 5 illustrates an electron micrograph of a graphite material not subjected to a ball milling process, and electron micrographs of graphite materials subjected to ball milling processes respectively for 0.5 hours, 1 hour, 2 hours, 4 hours, and 6 hours according to the example of method illustrated in FIG. 1. Fig. 6 is a graph showing X-ray diffraction measurements of the plate-type carbon nanoparticles produced according to the foregoing method.

FIG. 5 demonstrates that plate-type carbon nanoparticles may be produced by delamination of the graphite material as a time for performing the ball milling process is increased. Since the graphite material has a hexagonal stack structure, a peak is presented in a [002] direction of a crystal plane during an X-ray diffraction (XRD) measurement. High peak strength in the [002] direction means that crystallinity of an interlayer bonding structure of graphite is good. Low peak strength in the [002] direction means that the crystallinity of the interlayer bonding structure is poor due to the delamination of the graphite material.

FIG. 6 demonstrates that the peak strength in the [002] direction may decrease as the time for performing the ball milling process is increased. In particular, it is demonstrated that the peak in the [002] direction may be virtually eliminated when the time for performing the ball milling process is 6 hours or more. This means that the graphite material was virtually completely delaminated, and that plate-type carbon nanoparticles having a structure stacked with a single layer or a few layers were produced.

[Example 2]

Two grams (2 g) of a graphite material, 20 g of an exfoliating agent, and 300 g of ball mill balls were mixed, and then put into a steel ball mill container. The steel ball mill container was maintained in a vacuum in order to prevent oxidation. Then, argon (Ar) gas was purged, and a ball milling process was performed to produce plate-type carbon nanoparticles. At this time, the graphite material used was an Alfar Aesar product, natural, having a size of 200 mesh, the exfoliating agent used was a KSH2003 product manufactured by CJ Cheil Jedang Corporation. The ball mill ball used was formed of a polyimide material having a diameter of about 5 mm. Also, the ball milling process was performed by using a ball mill apparatus having specifications according to the following Table 1.

[Table 1]

| | |
|---|---|
| Distance between revolution axis and rotation axis, R | 170 mm |
| Radius of ball mill container, r | 60 mm |
| Revolution velocity | 300 rpm |
| Rotation velocity | 200 m |

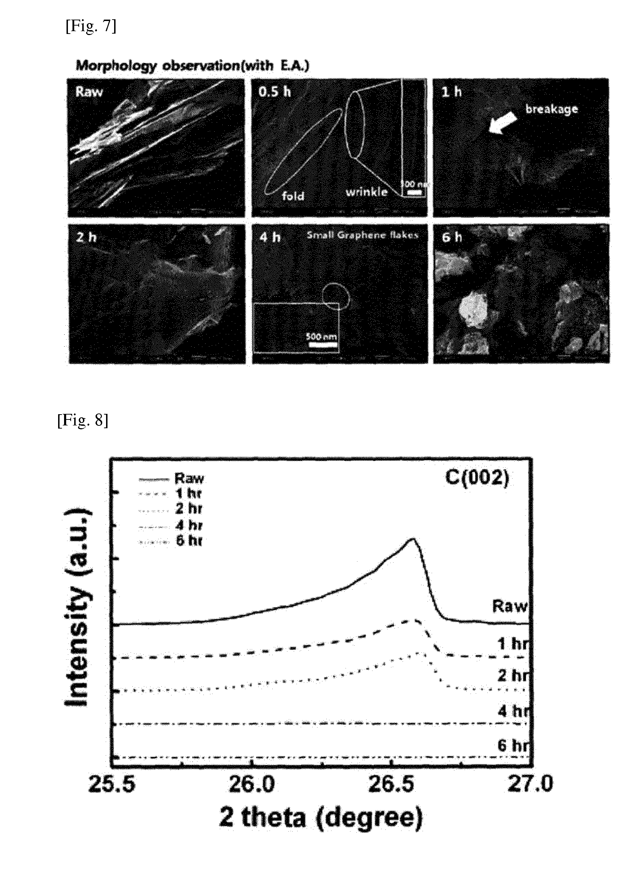

FIG. 7 illustrates an electron micrograph of a graphite material not subjected to a ball milling process, and electron micrographs of graphite materials subjected to ball milling processes respectively for 0.5 hours, 1 hour, 2 hours, 4 hours, and 6 hours according to the above described method. Fig. 8 is a graph showing X-ray diffraction measurements of plate-type carbon nanoparticles produced according to the foregoing method.

FIGS. 7 and 8 demonstrate that plate-type carbon nanoparticles may be produced by delamination of the graphite material as a time for performing the ball milling process increased. For example, a time for preparing the plate-type carbon nanoparticles may be decreased according to the addition of the exfoliating agent. Specifically, FIG. 8 demonstrates that a peak in the [002] direction may be virtually eliminated when the time for performing the ball milling process is 4 hours or more. Thus, it may be confirmed that the time for performing the ball milling process for preparing the plate-type carbon nanoparticles may be decreased to about 2 hours or more in the case of adding the exfoliating agent in comparison to the case of not adding the exfoliating agent.

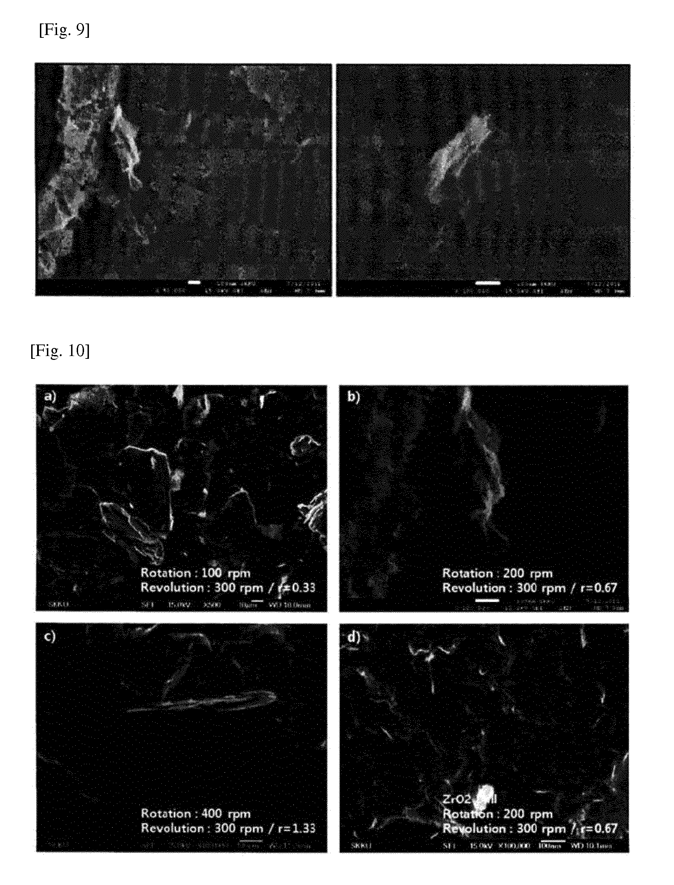

FIG. 9 is electron micrographs taken after dispersing the prepared plate-type carbon nanoparticles by using a spin coating method on polyethylene terephthalate (PET) in order to observe shapes of the plate-type carbon nanoparticles produced according to the foregoing method.

Referring to FIG. 9, the ball milling process was performed for about 4 hours and carbon nanoparticles were then photographed at magnifications of x50,000 and x100,000. FIG. 9 demonstrates that plate-type carbon nanoparticles having a size ranging from about 100 nm to about 200 nm were produced by the method.

[Comparative Examples 1, 2, and 3]

In Comparative Example 1, carbon nanoparticles were produced in the same manner as Example 2 except that the rotation velocity was set to 100 rpm.

In Comparative Example 2, carbon nanoparticles were produced in the same manner as Example 2 except that rotation velocity was 400 rpm.

In Comparative Example 3, carbon nanoparticles were produced in the same manner as Example 2 except that zirconia ($ZrO_2$) ball having a diameter of 5 mm was used as a ball mill ball.

FIG. 10 illustrates an electron micrograph (a) of carbon nanoparticles produced according to Comparative Example 1, an electron micrograph (b) of carbon nanoparticles produced according to Example 2, an electron micrograph (c) of carbon nanoparticles produced according to Comparative Example 2, and an electron micrograph (d) of carbon nanoparticles produced according to Comparative Example 3.

FIG. 10 demonstrates that the method of Comparative Example 1 virtually did not result in delamination or grinding caused by ball milling in comparison to the carbon nanoparticles presented in FIG. 10(b). The reason for this is that the ball mill balls did not apply sufficient mechanical shearing forces to the graphite material because the rotation velocity was too low. When calculating by using Equation 3 and Table 1, a critical angular velocity ratio (rc) in the ball mill apparatus presented in Table 1 was "1.4" and a ratio of rotation angular velocity to revolution angular velocity in Comparative Example 2 was "100/300". For instance, the ratio of rotation angular velocity to revolution angular velocity in Comparative Example 1 was about 23.8% of the critical angular velocity ratio (rc).

FIG. 10(c) illustrates that the carbon nanoparticles produced according to Comparative Example 2 were much thicker than the carbon nanoparticles presented in FIG. 10(b). The reason for this is that a centrifugal force due to the revolution and a centrifugal force due to the rotation interact to allow the ball mill balls to mainly transfer a force due to collision rather than a mechanical shearing force. As a result, the graphite material was not effectively delaminated. In Comparative Example 2, a ratio of rotation angular velocity to revolution angular velocity was "400/300". In other words, the ratio of rotation angular velocity to revolution angular velocity in Comparative Example 2 corresponded to about 95.2% of the critical angular velocity ratio (rc).

Referring to FIG. 10(d), it may be confirmed that a degree of damage in the carbon nanoparticles produced according to Comparative Example 3 was very large in comparison to that of the carbon nanoparticles presented in FIG. 10(b). The reason for this is that strong impact was transferred to the graphite material by the zirconia ball mill balls because density of the zirconia ball mill ball was 6.0 g/cm$^3$ while density of the polyimide ball mill ball was 1.43 g/cm$^3$.

<Method of Producing Aluminum-Carbon Composite Material>

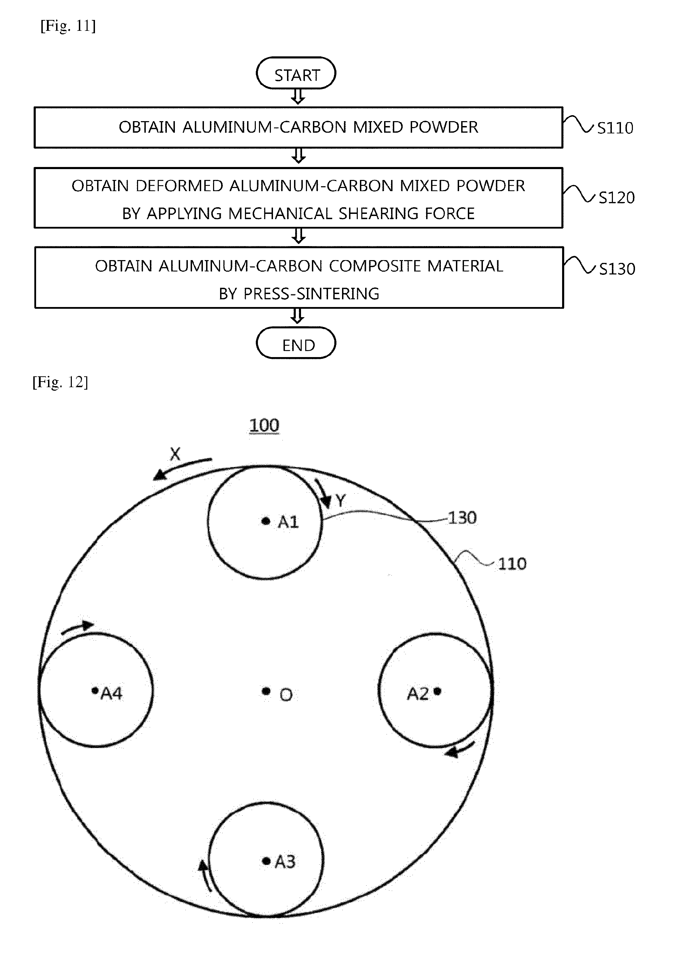

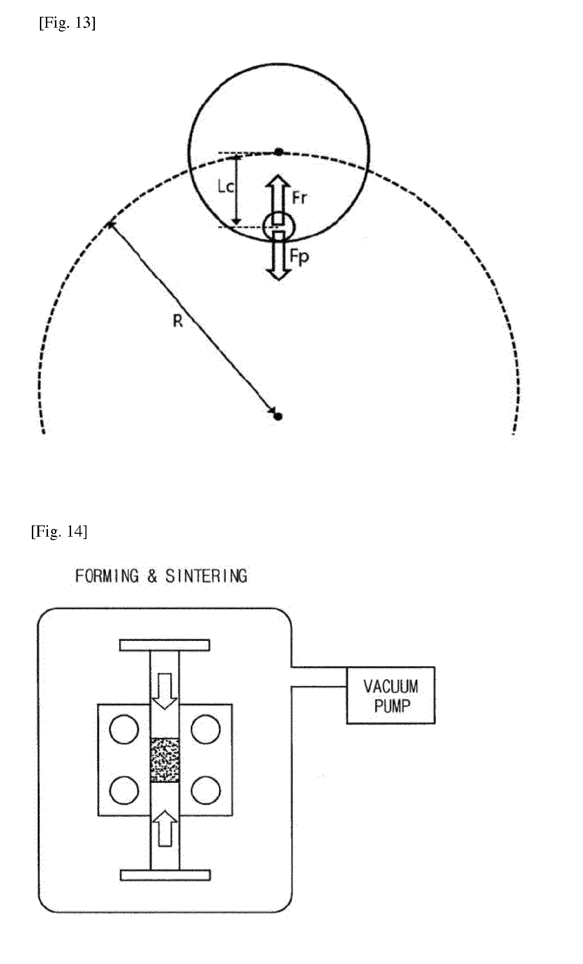

FIG. 11 is a flowchart illustrating an example of a method of producing an aluminum-carbon composite material. FIG. 12 is a plan view illustrating a ball mill apparatus. FIG. 13 is a schematic diagram illustrating forces applied to a ball mill ball introduced in a ball mill container.

Referring to FIGS. 11 to 13, in order to produce an aluminum-carbon composite material according to the examples described herein, aluminum-carbon mixed powder may first be prepared by combining aluminum powder with a carbon material (S110).

In order to combine aluminum powder with a carbon material, the carbon material may be first dispersed in a solvent and then a dispersed solution may be ultrasonicated. At least one or more of graphite plates, graphite fibers, carbon fibers, carbon nanofibers, and carbon nanotubes may be used as the carbon material. For example, plate-type carbon nanoparticles produced according to the foregoing method may be used as the carbon material. At least one or more of water, hexane, ethanol, methanol, propanol, ethylene glycol, amine, and phenol may be used as the solvent. Ultrasonication may be performed for about 0.5 minutes to about 60 minutes. The ultrasonication may not only uniformly disperse the carbon material but may form a functional group including oxygen, e.g., a hydroxyl group, in the carbon material. Subsequently, aluminum powder may be added to the ultrasonicated dispersed solution and again ultrasonicated, causing the precipitation of aluminum-carbon mixed powder. The aluminum powder may have a diameter ranging from about 100 nm to about 1 mm. The aluminum powder may be added to allow the carbon material to be included in an amount ranging from about 0.1 wt% to about 50 wt% based on a weight of the aluminum powder. Ultrasonication for precipitating aluminum-carbon mixed powder may be performed for about 0.5 minutes to about 60 minutes. The ultrasonication may induce bonding between the functional group including oxygen formed in the carbon material and aluminum. Thereafter, the precipitated aluminum-carbon mixed powder may be separated and dried.

The aluminum-carbon mixed powder was produced and then deformed aluminum-carbon mixed powder may be produced by applying a mechanical shearing force to the aluminum-carbon mixed powder (S120).

Referring again to FIGS. 1 to 3, in order to apply a mechanical shearing force to aluminum-carbon mixed powder, aluminum-carbon mixed powder and ball mill balls may be introduced in a ball mill container 130 combined to be rotatable in a disc 110. The disc 110 may rotate in a first direction X around a first central axis (hereinafter, referred to as "revolution axis") positioned at the center "O" of the disc 110. The ball mill container 130 may be combined at an edge of the disc 110 and may rotate in a second direction Y opposite to the first direction X around a second central axis (hereinafter, referred to as "rotation axis") positioned at the center "A1" of the ball mill container 130. That is, the ball mill container 130 may be revolved around the revolution axis by the rotation of the disc 110 and may be rotated by the rotation of the ball mill container 130 itself around the rotation axis.

A material for the ball mill ball is not particularly limited, but a ball mill ball formed of a zirconia material may be used in order to effectively apply a frictional force to the aluminum-carbon mixed powder. A size of the ball mill ball may be appropriately selected in consideration of a shearing force to be applied to the aluminum-carbon mixed powder. For example, a diameter of the ball mill ball may be in a range of about 3 mm to about 50 mm. In the case that the size of the ball mill ball is less than 3 mm, a mass of the ball mill ball may be relatively low and thus, a mechanical shearing force exerted on the aluminum-carbon mixed powder may be lower than a required value, and as a result, the carbon material combined with the aluminum powder may not be aligned in a predetermined direction or the aluminum powder may not be deformed in a predetermined plate shape. In contrast, in the case that the size of the ball mill ball is greater than 50 mm, an excessively high shearing force or impact may be exerted on the aluminum-carbon mixed powder and thus, the aluminum-carbon mixed powder may be damaged. Thereafter, the disc 110 and the ball mill container 130 may be rotated so as to allow the ball mill balls introduced in the ball mill container 130 to apply a mechanical shearing force to the aluminum-carbon mixed powder.

When the disc 110 and the ball mill container 130 are rotated, a first centrifugal force Fr due to the revolution of the ball mill container 130 and a second centrifugal force Fp due to the rotation of the ball mill container 130 act on the ball mill balls introduced in the ball mill container 130. The first centrifugal force Fr is exerted in a direction in which the ball mill ball moves away from the revolution axis. The second centrifugal force Fp is exerted in a direction in which the ball mill ball moves away from the rotation axis. Magnitudes and directions of the exerted first and second centrifugal forces Fr and Fp are changed according to the position of the ball mill ball. Also, when the ball mill ball container 130 rotates in a state in which the disc 110 rotates, the ball mill ball rotates in the same direction as that of the ball mill container 130 due to a frictional force between the ball mill ball and a wall of the ball mill container 130. According to the action of these forces, the ball mill ball in the ball mill container 130 may have (i) a motion of colliding with other ball mill balls, the aluminum-carbon mixed powder, or the inner wall of the ball mill container 130, or (ii) a motion of generating friction by the rotation of the corresponding ball mill balls in a state of being in contact with other ball mill balls, the aluminum-carbon mixed powder, or the inner wall of the ball mill container 130, i.e., a motion of applying a mechanical shearing force. In the present example, the foregoing forces are controlled to allow the ball mill balls to apply a mechanical shearing force to the aluminum-carbon mixed powder in a state of being in contact with the aluminum-carbon mixed powder. The foregoing forces may be controlled by adjusting rotation velocities of the disc 110 and the ball mill container 130.

According to the rotation velocities of the disc 110 and the ball mill container 130, the ball mill balls have various motions caused by the actions of the foregoing forces. Specifically, in the case that rotation velocity of the ball mill container 130 is gradually increased while the ball mill container 130 rotates in a state in which the disc 110 rotates at a predetermined speed, the ball mill balls may have different motions in a first range in which the rotation velocity of the ball mill container 130 is less than a first velocity, a second range in which the rotation velocity of the ball mill container 130 is equal to or greater than the first velocity and less than a second velocity, and a third range in which the rotation velocity of the ball mill container 130 is equal to or greater than the second velocity.

In the first range in which the rotation velocity of the ball mill container 130 is less than the first velocity, the first centrifugal force Fr due to the revolution of the ball mill container 130 greatly acts on the ball mill balls and as a result, the ball mill ball may have a rotation motion around the revolution axis at a position located farthest from the revolution axis in an inner space of the ball mill container 130. In this case, since the inner wall of the ball mill container 130 may apply a frictional force to the ball mill ball due to the rotation of the ball mill container 130, the ball mill ball may rotate by itself.

In the second range in which the rotation velocity of the ball mill container 130 is equal to or greater than the first velocity and less than the second velocity, the first centrifugal force due to the revolution of the ball mill container 130 and the second centrifugal force due to the rotation of the ball mill container 130 interact, Thus, the ball mill ball moves to the inner space of the ball mill container 130 to have a motion of colliding with the wall of the ball mill container.

In the third range in which the rotation velocity of the ball mill container 130 is equal to or greater than the second velocity, the second centrifugal force due to the rotation of the ball mill container 130 becomes greater. Thus, the ball mill ball may have a rotational motion around the rotation axis in a state of being in contact with the wall of the ball mill container 130. In this case, since friction between the inner wall of the ball mill container 130 and the ball mill ball is virtually not generated, rotation of the ball mill ball itself is virtually not generated.

In the present example, rotation velocities of the disc 110 and the ball mill container 130 are controlled so as to allow the ball mill ball to apply a mechanical shearing force to the aluminum-carbon mixed powder by moving according to the first region. In order for the ball mill ball in the ball mill container 130 not to have a rotational motion around the rotation axis, the revolution centrifugal force Fr acting on the ball mill ball located at the nearest from the revolution axis in the inner space of the ball mill container 130 must be at least greater than the rotation centrifugal force Fp, as shown in FIG. 3. The revolution centrifugal force Fr acting on the ball mill ball located at the nearest from the revolution axis in the inner space of the ball mill container 130 may be expressed by the following "Equation 4", and the rotation centrifugal force Fp acting on the ball mill ball located at the nearest from the revolution axis in the inner space of the ball mill container 130 may be expressed by the following "Equation 5".

[Equation 4]

$$Fr = m(R - Lc)w_1^2$$

[Equation 5]

$$Fp = mLcw_2^2$$

In Equations 4 and 5, "m" denotes a weight of the ball mill ball, "R" denotes a distance between the revolution axis and the rotation axis, i.e., a radius of revolution, "Lc" denotes a value obtained by extracting a diameter of the ball mill ball from a diameter of the ball mill container, "w1" denotes a revolution angular velocity, and "$w_2$" denotes a rotation angular velocity.

In the case that the revolution centrifugal force Fr acting on the ball mill ball located at the nearest from the revolution axis is the same as rotation centrifugal force Fp acting on the ball mill ball, when a ratio "$w_2/w_1$" of the rotation angular velocity $w_2$ to the revolution angular velocity $w_1$ is denoted as a critical angular velocity ratio "rc", the critical angular velocity ratio "rc" may be expressed by the following "Equation 6" by being derived from "Equation 1" and "Equation 2".

[Equation 6]

$$rc = \sqrt{\frac{R}{Lc} - 1}$$

In the present example, the ratio of the rotation velocity to the revolution velocity of the ball mill container 130 may be controlled to be in a range of about 30% to about 70% of the critical angular velocity ratio. In order for the ball mill ball to mainly apply a mechanical shearing force to the aluminum-carbon mixed powder instead of colliding with the aluminum-carbon mixed powder by allowing the revolution centrifugal force rather than the rotation centrifugal force to greatly act on the ball mill ball, the ratio ($w_2/w_1$) of the rotation velocity to the revolution velocity must be about 70% or less of the critical angular velocity ratio (rc). That is, in the case that the ratio ($w_2/w_1$) of the rotation velocity to the revolution velocity is greater than 70% of the critical angular velocity ratio (rc), an effect of the centrifugal force caused by the rotation is increased. Thus, the ball mill ball may have a motion of mainly colliding with the aluminum-carbon mixed powder. Also, in the case that the ratio ($w_2/w_1$) of the rotation velocity to the revolution velocity is less than 30% of the critical angular velocity ratio (rc), a mechanical shearing force exerted on the graphite material may become too low as the rotation velocity of the ball mill ball itself is low. As a result, the carbon material combined with the aluminum powder may not be aligned in a predetermined direction or the aluminum powder may not be deformed in a predetermined plate shape. The mechanical shearing force exerted on the aluminum-carbon mixed powder by the ball mill ball is affected by the rotation velocity of the ball mill ball itself, in which the rotation velocity of the ball mill ball itself is determined by the rotation velocity. For example, the rotation velocity of the ball mill ball itself increases as the rotation velocity of the ball mill container increases.

The mechanical shearing force exerted on the aluminum-carbon mixed powder by the ball mill ball is also affected by pressure in which the ball mill ball pressurizes the aluminum-carbon mixed powder. The pressure, in which the ball mill ball pressurizes the aluminum-carbon mixed powder, is affected by the revolution velocity of the ball mill container 130. For instance, the pressure in which the ball mill ball pressurizes the graphite material increases as the revolution velocity of the ball mill container 130 increases. In the present example, the revolution velocity of the ball mill container may be controlled to be in a range of about 150 rpm to about 500 rpm in order for the ball mill ball to apply an appropriate magnitude of mechanical shearing force to the aluminum-carbon mixed powder.

The inside of the ball mill container 130 may be maintained in a non-oxidizing atmosphere during a ball milling process in order to prevent oxidization of the aluminum-carbon mixed powder. The ball milling process may be performed for about 5 minutes to about 6 hours. As described above, when the mechanical shearing force is applied to the aluminum-carbon mixed powder, the aluminum-carbon mixed powder may be deformed to have a shape close to a plate shape and the carbon material combined to the surface of the aluminum powder may be aligned to be extended in one direction.

Referring again to FIG. 11, the mechanical shearing force was applied to the aluminum-carbon mixed powder, and the deformed aluminum-carbon mixed powder may then be press-sintered.

In order to press-sinter the deformed aluminum-carbon mixed powder, the deformed aluminum-carbon mixed powder may first be charged into a mold. In this example, subsequently, the deformed aluminum-carbon mixed powder charged into the mold was sintered at a temperature ranging from about 500°C to about 700°C for about 1 minute to about 1 hour in a state in which a pressure ranging from about 10 MPa to about 100 MPa was applied from a top and a bottom in a vacuum environment; thus, the deformed aluminum-carbon mixed powder charged into the mold may be plastically deformed. Thereafter, a final aluminum-carbon composite material may be separated from the mold. FIG. 14 is a schematic diagram illustrating a sinter press for press-sintering deformed aluminum-carbon mixed powder.

[Examples 3, 4, and 5]

Aluminum powder and carbon material were added to 20 ml of a hexane solvent and ultrasonicated by using a horn-type sonicator to prepare aluminum-carbon mixed powder. Two grams (2 g) of aluminum powder was added and the carbon material was respectively added in an amount of 0.05 wt% (Example 3), 0.1 wt% (Example 4), and 0.3 wt% (Example 5) based on the weight of the aluminum powder. An aluminum powder product having a particle size of 3 $\mu$m purchased from Kojundo Chemical Lab. Co., Ltd. (Japan) was used as the aluminum powder. Nano graphite plates having a size ranging from 100 nm to 500 nm were used as the carbon material.

Subsequently, 2g of the produced aluminum-carbon mixed powder and 300 g of ball mill balls were put in a ball mill container (JE POWDER) formed of carbon steel. Then, a ball milling process for applying a mechanical shearing force to the aluminum-carbon mixed powder was performed to produce deformed aluminum-carbon mixed powder. A ball mill apparatus having specifications of the following Table 2 was used for the ball milling process. The ball mill container was maintained at a vacuum ($10^{-2}$ torr) in order to prevent oxidation, and then argon (Ar) was purged. The ball milling process was performed for about 2 hours. A zirconia ball having a diameter of about 5 mm was used as a ball mill ball.

[Table 2]

| | |
|---|---|
| Distance between revolution axis and rotation axis, R | 170 mm |
| Radius of ball mill container, r | 60 mm |
| Revolution velocity | 300 rpm |
| Rotation velocity | 200 m |

When calculating by using Equation 6, Table 2, and the diameter of the ball mill ball, it may be understood that a critical angular velocity ratio (rc) in the ball mill apparatus presented in Table 2 was "1.4" in this example. That is, a ratio of rotation velocity to revolution velocity of the ball mill container in Examples 3, 4, and 5 was "200/300", wherein the ball milling process was performed under a condition in which the ratio was about 47.6% of the critical angular velocity ratio (rc).

Subsequently, deformed aluminum-carbon mixed powder was put in a mold, and upper and lower punches were positioned and then pressed at a pressure of 50 MPa by using a hydraulic press. Thereafter, an aluminum-carbon composite material was prepared by sintering at a temperature of 600°C for about 30 minutes. At this time, an atmosphere inside a chamber of the sinter press was maintained in a vacuum state of $10^{-2}$ torr. FIG. 14 is a schematic diagram illustrating a sinter press.

[Experimental Example 1: Evaluation of Characteristics in Example 3]

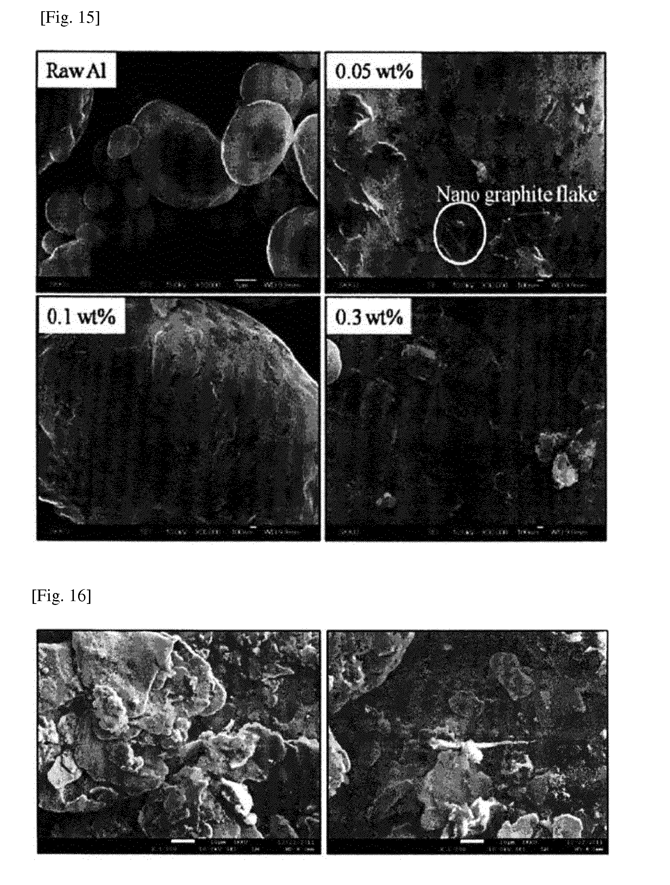

FIG. 15 illustrates electron micrographs of ultrasonicated aluminum samples. For example, the micrograph on the upper left side of FIG. 15 is an electron micrograph of powder composed of only aluminum, and the micrographs on the upper right, lower left, and lower right sides of FIG. 5 are electron micrographs of aluminum-carbon mixed powders respectively having a concentration of nano graphite plates of 0.05 wt% (Example 3), 0.1 wt% (Example 4), and 0.3 wt% (Example 5). The micrographs on the upper right, lower left, and lower right sides of FIG. 15 show that nano graphite plates were uniformly dispersed and combined on the surface of the aluminum powder.

FIG. 16 illustrates electron micrographs (X1,000) of deformed aluminum-carbon mixed particles after a ball milling process. FIG. 16 is electron micrographs of deformed aluminum-carbon mixed particles corresponding to a concentration of nano graphite plates of 0.1 wt% (Example 4). FIG. 16 confirms that a shape of the deformed aluminum-carbon mixed particles was deformed to a plate shape due to the application of the mechanical shearing force by the ball mill balls.

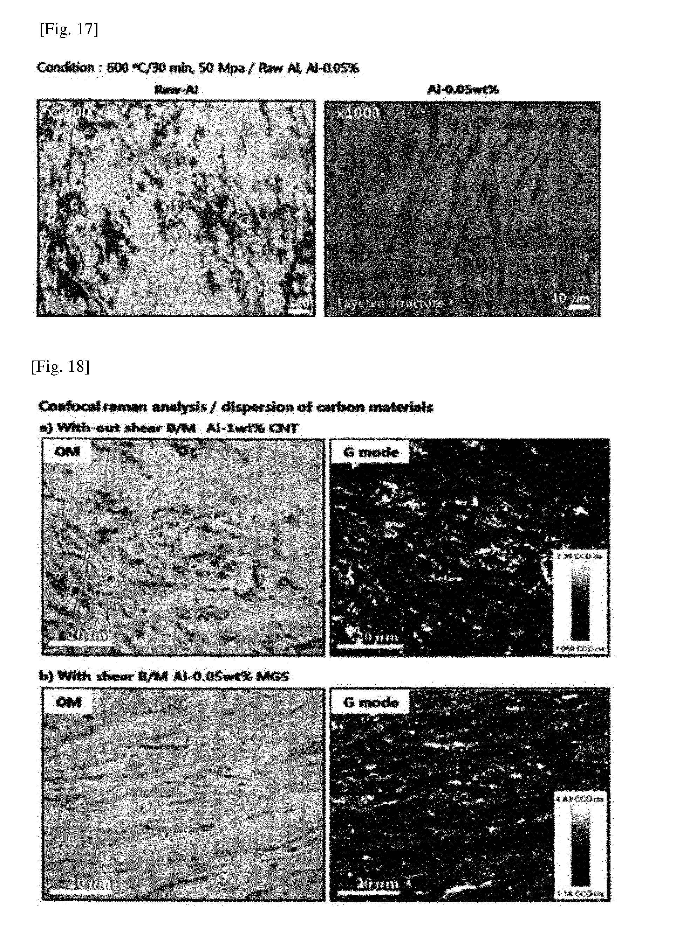

FIG. 17 illustrates photographs showing the microstructures of an aluminum material without the addition of carbon material, and an aluminum-carbon composite material including 0.05 wt% (Example 3) of the carbon material. For example, the photograph on the left side of FIG. 17 is a micrograph (Olympus, GC51F) of the aluminum material without the addition of a carbon material. The photograph on the right side of FIG. 17 is a micrograph of the aluminum-carbon composite material including 0.05 wt% of the carbon material. FIG. 17 demonstrates that aluminum and carbon may form a stack structure in the aluminum-carbon composite material prepared according to Example 3 described above.

FIG. 18(a) is the result of confocal Raman (WITec GmbH, CRM 200) measurements of an aluminum-carbon composite material produced by performing a ball milling process under a condition in which ball mill balls mainly impact aluminum-carbon mixed powder. FIG. 18(b) is the result of confocal Raman (WITec GmbH, CRM 200) measurements of an aluminum-carbon composite material produced by performing a ball milling process under a condition in which ball mill balls mainly apply a mechanical shearing force to aluminum-carbon mixed powder according to Example 3. A G mode during the confocal Raman measurements represents an inherent peak (G mode) of the carbon material as a yellow spot. It may be understood that the aluminum-carbon composite material of FIG. 18(b) not only had a uniformly distributed carbon material in comparison to the aluminum-carbon composite material of FIG. 18(a) but also had a stack structure of aluminum and carbon material.

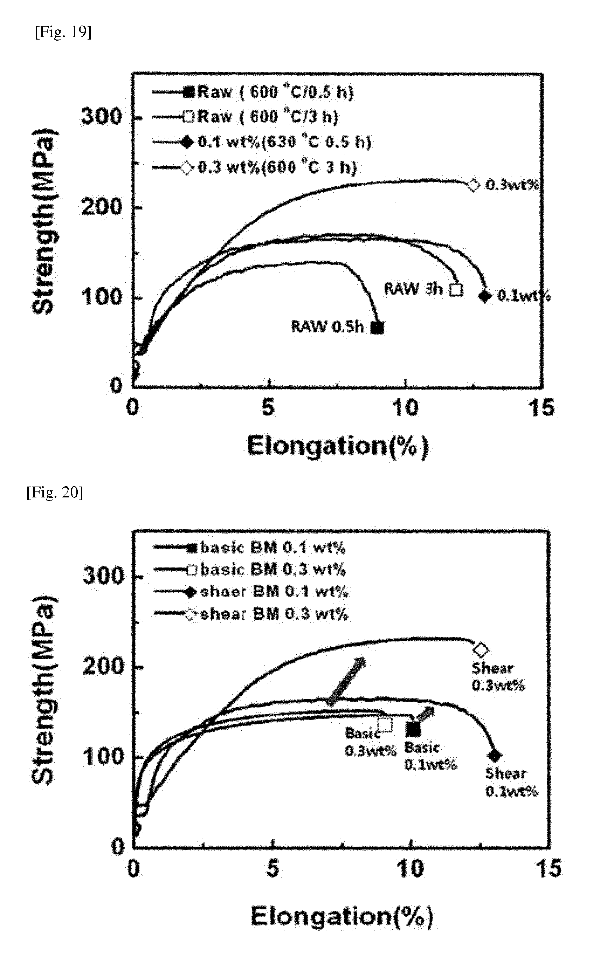

Table 3 presents the result of tensile strength measurements for a sample (RAW) of an aluminum material, a sample (Al-0.1 wt% C, Example 4) of an aluminum-carbon composite material having a content of a carbon material of 0.1 wt%, and a sample (Al-0.3 wt% C, Example 5) of an aluminum-carbon composite material having a content of a carbon material of 0.3 wt%. FIG. 19 is a graph showing the result of tensile strength measurements for the sample (RAW) of the aluminum material, the sample (Al-0.1 wt% C, Example 4) of the aluminum-carbon composite material having a content of a carbon material of 0.1 wt%, and the sample (Al-0.3 wt% C, Example 5) of the aluminum-carbon composite material having a content of a carbon material of 0.3 wt%. In order to measure mechanical characteristics of the samples, the samples were extruded in a diameter of 2 mm and machined into specimens having a gauge length of 20 mm and a diameter of 1.3 mm. Tensile tests were performed at a rate of 0.1 mm/min by using a universal testing machine (Lloyd instruments Ltd., LR30K).

[Table 3]

| Sample | Tensile stress (MPa) | Rate of increase in tensile strength (%) | Elongation (%) | Rate of increase in elongation (%) |
|---|---|---|---|---|
| Raw 1 (600°C, 0.5 h) | 142.76 | - | 8.93 | - |
| Al-0.1 wt% C (630°C, 0.5 h) | 164.30 | 15.09 | 12.92 | 44.68 |

(continued)

| Sample | Tensile stress (MPa) | Rate of increase in tensile strength (%) | Elongation (%) | Rate of increase in elongation (%) |
|---|---|---|---|---|
| Raw 2 (600°C, 3.0 h) | 172.85 | - | 11.86 | - |
| Al-0.3 wt% C (600°C, 3.0 h) | 233.07 | 34.84 | 12.24 | 3.20 |

Table 3 and FIG. 19 illustrate that, in the case of the aluminum-carbon composite material (Example 4) having a stack structure of aluminum and carbon and a carbon content of 0.1 wt% was produced by press-sintering at 600°C for 30 minutes, the tensile strength and elongation were respectively increased to 15% and 45% in comparison to those of the aluminum material (Raw 1). Also, in the case of the aluminum-carbon composite material (Example 5) having a stack structure of aluminum and carbon and a carbon content of 0.3 wt% was produced by press-sintering at 600°C for 3 hours, the tensile strength and elongation were respectively increased to 35% and 3% in comparison to those of the aluminum material (Raw 2).

[Comparative Examples 4 and 5]

An aluminum-carbon composite material was produced in the same manner as Example 4 except that a ball milling process in Comparative Example 4 was performed by adjusting a ratio of rotation velocity to revolution velocity of a ball mill container so as to have a critical angular velocity ratio (rc) of 1.4.
An aluminum-carbon composite material was produced in the same manner as Example 4 except that a ball milling process in Comparative Example 5 was performed by adjusting a ratio of rotation velocity to revolution velocity of a ball mill container so as to have a critical angular velocity ratio (rc) of 1.4.
The following "Table 4" presents the result of tensile strength measurements for the aluminum-carbon composite materials produced according to Comparative Example 4, Example 4, Comparative Example 5, and Example 5. FIG. 20 is a graph showing the result of tensile strength measurements for the aluminum-carbon composite materials produced according to Comparative Example 4, Example 4, Comparative Example 5, and Example 5.

[Table 4]

| Sample | Tensile stress (MPa) | Rate of increase in tensile strength (%) | Elongation (%) | Rate of increase in elongation (%) |
|---|---|---|---|---|
| Comparative Example 4 | 147.29 | - | 8.93 | - |
| Example 4 | 164.30 | 11.55 | 12.92 | 28.17 |
| Comparative Example 5 | 152.60 | - | 11.86 | - |
| Example 5 | 233.07 | 52.73 | 12.24 | 33.92 |

Referring to Table 4 and FIG. 20, in the case of the aluminum-carbon composite material according to Example 4, tensile strength and elongation were respectively increased to 11.55% and 28.17% in comparison to those of the aluminum-carbon composite material according to Comparative Example 4. Also, in the case of the aluminum-carbon composite material according to Example 5, tensile strength and elongation were respectively increased to 52.73% and 33.92% in comparison to those of the aluminum-carbon composite material according to Comparative Example 5. Therefore, it may be understood that the aluminum-carbon composite materials according to the examples described herein had significantly improved mechanical characteristics in comparison to those of the aluminum-carbon composite materials according to Comparative Examples.
According to the foregoing method of producing plate-type carbon nanoparticles, plate-type carbon nanoparticles may be massively produced in a short period of time through a relatively simple process. Also, since a high temperature (such as heating) is not required in order to produce plate-type carbon nanoparticles, a lot of energy may be saved.
According to the foregoing method of producing an aluminum-carbon composite material, an aluminum-carbon composite material may be massively produced through a relatively simple process. Also, the aluminum-carbon composite material produced according to the foregoing preparation method may have improved tensile strength due to a carbon material uniformly dispersed and forming a stack structure with aluminum. Therefore, in the case that the aluminum-carbon composite material is used as a structural material, a lightweight structure may be efficiently manufactured.

Further, according to the examples of methods of producing plate-type carbon nanoparticles disclosed above, plate-type carbon nanoparticles may be massively produced in a short period of time. Also, since a high temperature or heating is not required in order to produce plate-type carbon nanoparticles, a lot of energy may be saved.

In the case that an aluminum-carbon composite material is produced according to the examples above, an aluminum-carbon composite material having excellent mechanical properties may be produced because a carbon material and aluminum have a stack structure as well as the carbon material being uniformly dispersed. The aluminum-carbon composite material is lightweight and has excellent mechanical strength. Thus, the aluminum-carbon composite material may be used in automotive parts and may also be used as materials for airplanes, spaceships, and ships, which require high strength.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

**Claims**

1. A method of preparing plate-type carbon nanoparticles, the method comprising:

   putting a graphite material and ball mill balls in a ball mill container combined with a disc rotatable in a first direction to be rotatable in a second direction opposite to the first direction;
   rotating the disc and the ball mill container for a predetermined time to allow the ball mill balls to generate friction with a wall of the ball mill container and rotate by themselves to apply a mechanical shearing force to the graphite material; and
   separating prepared carbon nanoparticles from the graphite material.

2. The method according to claim 1, wherein the graphite material comprises at least one or more selected from the group consisting of a plate-type artificial graphite material, a powder-type artificial graphite material, a lump artificial graphite material, a plate-type natural graphite material, a powder-type natural graphite material, and a lump natural graphite material.

3. The method according to claim 1, wherein the rotating of the disc and the ball mill container to apply a mechanical shearing force to the graphite material is performed in a non-oxidizing atmosphere.

4. The method according to claim 1, wherein a ratio of rotation velocity of the ball mill container to rotation velocity of the disc is in a range of 30% or more to 70% or less of a critical angular velocity ratio.

5. The method according to claim 4, wherein the rotation velocity of the disc is in a range of 150 rpm or more to 500 rpm or less.

6. The method according to claim 1, wherein an exfoliating agent increasing a frictional force between the graphite material and the ball mill ball is further added in the putting of the graphite material and the ball mill balls in the ball mill container.

7. The method according to claim 6, wherein the exfoliating agent comprises at least one selected from the group consisting of a surfactant, an organic material, and an inorganic material, which increase the frictional force between the graphite material and the ball mill ball, the surfactant comprises at least one selected from the group consisting of sodium dodecyl sulfate (SDS), sodium dodecylbenzene sulfonate (NaDDBs), and cetyltrimethylammonium bromide (CTAB), the organic material comprises at least one selected from the group consisting of sugar and deoxyribonucleic acid (DNA), and the inorganic material comprises aluminum.

8. The method according to claim 7, further comprising washing the separated plate-type carbon nanoparticles by using a solvent dissolving the exfoliating agent.

9. The method according to claim 7, wherein the disc and the ball mill container are rotated for 4 hours or more.

10. A method of preparing an aluminum-carbon composite material, the method comprising:

> preparing aluminum-carbon mixed powder by combining aluminum powder with a carbon material;
> preparing deformed aluminum-carbon mixed powder by applying a mechanical shearing force to the aluminum-carbon mixed powder; and
> press-sintering the deformed aluminum-carbon mixed powder.

11. The method according to claim 10, wherein the preparing of the aluminum-carbon mixed powder comprises:

> ultrasonicating after mixing a carbon material with a solvent; and
> ultrasonicating after adding aluminum powder to the ultrasonicated mixed solution.

12. The method according to claim 11, wherein the carbon material comprises at least one selected from the group consisting of graphite plates, graphite fibers, carbon fibers, carbon nanofibers, and carbon nanotubes.

13. The method according to claim 11, wherein the aluminum powder is added to allow the carbon material to be included in an amount ranging from about 0.1 wt% to about 50 wt% based on a weight of the aluminum powder.

14. The method according to claim 10, wherein the preparing of the deformed aluminum-carbon mixed powder comprises:

> putting the aluminum-carbon mixed powder and ball mill balls in a ball mill container combined with a disc rotatable in a first direction to be rotatable in a second direction opposite to the first direction; and
> rotating the disc and the ball mill container for a predetermined time to allow the ball mill balls to generate friction with a wall of the ball mill container and rotate by themselves to apply a mechanical shearing force to the aluminum-carbon mixed powder.

15. The method according to claim 14, wherein a ratio of rotation velocity of the ball mill container to rotation velocity of the disc is in a range of 30% or more to 70% or less of a critical angular velocity ratio.

16. The method according to claim 15, wherein the rotation velocity of the disc is in a range of 150 rpm or more to 500 rpm or less.

17. The method according to claim 14, wherein the press-sintering of the deformed aluminum-carbon mixed powder comprises:

> charging the deformed aluminum-carbon mixed powder into a mold; and
> heating the deformed aluminum-carbon mixed powder to a temperature ranging from 500°C to 700°C in a state in which a pressure ranging from 10 MPa to 100 MPa is applied to the deformed aluminum-carbon mixed powder charged into the mold.

[Fig. 1]

```
                        ┌──────────┐
                        │  START   │
                        └──────────┘
                             ⇩
┌────────────────────────────────────────────────────┐
│    PLACE GRAPHITE MATERIAL AND BALL MILL BALLS IN    │  ∿ S110
│              BALL MILL CONTAINER                     │
└────────────────────────────────────────────────────┘
                             ⇩
┌────────────────────────────────────────────────────┐
│     APPLY MECHANICAL SHEARING FORCE TO GRAPHITE      │  ∿ S120
│   MATERIAL BY ROTATING DISC AND BALL MILL CONTAINER  │
└────────────────────────────────────────────────────┘
                             ⇩
┌────────────────────────────────────────────────────┐
│            SEPARATE CARBON NANOPLATES                │  ∿ S130
└────────────────────────────────────────────────────┘
                             ⇩
                        ┌──────────┐
                        │   END    │
                        └──────────┘
```

[Fig. 2]

[Fig. 3]

[Fig. 4]

```
                    ┌─────────────┐
                    │    START    │
                    └─────────────┘
                           ⇓
┌──────────────────────────────────────────────────┐
│  PLACE GRAPHITE MATERIAL, EXFOLIATING AGENT AND BALL │ ⟋ S210
│       MILL BALLS IN BALL MILL CONTAINER            │
└──────────────────────────────────────────────────┘
                           ⇓
┌──────────────────────────────────────────────────┐
│   APPLY MECHANICAL SHEARING FORCE TO GRAPHITE      │ ⟋ S220
│  MATERIAL BY ROTATING DISC AND BALL MILL CONTAINER │
└──────────────────────────────────────────────────┘
                           ⇓
┌──────────────────────────────────────────────────┐
│          SEPARATE CARBON NANOPLATES                │ ⟋ S230
└──────────────────────────────────────────────────┘
                           ⇓
┌──────────────────────────────────────────────────┐
│            WASH CARBON NANOPLATES                  │ ⟋ S240
└──────────────────────────────────────────────────┘
                           ⇓
                    ┌─────────────┐
                    │     END     │
                    └─────────────┘
```

[Fig. 5]

Morphology observation(without E.A.)

[Fig. 6]

[Fig. 7]

[Fig. 8]

[Fig. 9]

[Fig. 10]

[Fig. 11]

```
                    ┌─────────┐
                    │  START  │
                    └─────────┘
                         ⇓
  ┌──────────────────────────────────────────────────┐
  │      OBTAIN ALUMINUM-CARBON MIXED POWDER          │⟩∿ S110
  └──────────────────────────────────────────────────┘
                         ⇓
  ┌──────────────────────────────────────────────────┐
  │  OBTAIN DEFORMED ALUMINUM-CARBON MIXED POWDER     │⟩∿ S120
  │     BY APPLYING MECHANICAL SHEARING FORCE         │
  └──────────────────────────────────────────────────┘
                         ⇓
  ┌──────────────────────────────────────────────────┐
  │   OBTAIN ALUMINUM-CARBON COMPOSITE MATERIAL       │⟩∿ S130
  │              BY PRESS-SINTERING                   │
  └──────────────────────────────────────────────────┘
                         ⇓
                    ┌─────────┐
                    │   END   │
                    └─────────┘
```

[Fig. 12]

[Fig. 13]

[Fig. 14]

FORMING & SINTERING

[Fig. 15]

[Fig. 16]

[Fig. 17]

Condition : 600 °C/30 min, 50 Mpa / Raw Al, Al-0.05%

[Fig. 18]

[Fig. 19]

[Fig. 20]

## INTERNATIONAL SEARCH REPORT

| | International application No. |
|---|---|
| | **PCT/KR2012/001888** |

**A. CLASSIFICATION OF SUBJECT MATTER**

*C01B 31/02(2006.01)i, C01F 7/00(2006.01)i, C01B 31/04(2006.01)i, B01J 19/18(2006.01)i*

According to International Patent Classification (IPC) or to both national classification and IPC

**B. FIELDS SEARCHED**

Minimum documentation searched (classification system followed by classification symbols)
C01B 31/02; C01F 7/00; B22F 1/02; C04B 35/56; B22F 1/00; B22F 9/14; B22F 9/04

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: nanoparticles, ball mill, aluminum-carbon composite material

**C. DOCUMENTS CONSIDERED TO BE RELEVANT**

| Category* | Citation of document, with indication, where appropriate, of the relevant passages | Relevant to claim No. |
|---|---|---|
| X | KR 10-2009-0114091 A (RESEARCH & BUSINESS FOUNDATION SUNGKYUNKWAN UNIVERSITY et al.) 03 November 2009 | 10-13 |
| A | KR 10-2009-0075651 A (RESEARCH & BUSINESS FOUNDATION SUNGKYUNKWAN UNIVERSITY et al.) 08 July 2009 | 1-17 |
| A | JP 2006-328454 A (NISSEI PLASTICS IND., CO. et al.) 07 December 2006 | 1-17 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 FEBRUARY 2013 (07.02.2013) | **07 FEBRUARY 2013 (07.02.2013)** |

| Name and mailing address of the ISA/KR | Authorized officer |
|---|---|
| Korean Intellectual Property Office Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2012/001888**

| Patent document cited in search report | Publication date | Patent family member | Publication date |
|---|---|---|---|
| KR 10-2009-0114091 A | 03.11.2009 | NONE | |
| KR 10-2009-0075651 A | 08.07.2009 | CN 101475171 A | 08.07.2009 |
| | | CN 102432010 A | 02.05.2012 |
| | | EP 2077339 A2 | 08.07.2009 |
| | | EP 2077339 A3 | 21.03.2012 |
| | | JP 2009-161849 A | 23.07.2009 |
| | | JP 2012-188756 A | 04.10.2012 |
| | | KR 10-0907334 B1 | 13.07.2009 |
| | | US 2009-0176090 A1 | 09.07.2009 |
| JP 2006-328454 A | 07.12.2006 | CN 1940117 A | 04.04.2007 |
| | | CN 1940117 C0 | 04.04.2007 |
| | | US 2006-0269435 A1 | 30.11.2006 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20120024193
- KR 20120024194